# EUROPEAN PATENT APPLICATION

(11) **EP 0 551 837 A1**
(43) Date of publication of application: **21.07.1993**
(21) Application number: 93100225.7
(22) Date of filing: 08.01.1993
(51) Int. Cl.: C08J 5/06, D06M 10/02

(54) **Polyethylene composites**

(30) Priority: 10.01.1992 IL 100630
(71) Applicant: YEDA RESEARCH AND DEVELOPMENT CO. LTD., Rehovot 76100 (IL)
(72) Inventor: Wagner, Daniel, Rehovot (IL)
(74) Representative: VOSSIUS & PARTNER

(57) **Abstract**

A polyethylene composite with improved mechanical properties, consisting of a low density polyethylene matrix and a reinforcing structure of ultrahigh molecular weight polyethylene fibers/ held together by a transcrystalline interface layer. For making the new composite, ultrahigh molecular weight polyethylene reinforcing fibers are first activated with oxygen plasma, and are then immersed into a melt of low density polyethylene whereupon the melt is cooled, first to a transcrystallization temperature and then to below the melting temperature.

## Description

The invention is in the field of synthetic polyhydrocarbon composite material and concerns specifically composite polyethylene materials with fiber reinforcement.

It is known that the strength of a solid polymer may be improved by reinforcing it with fibers and many composite materials having a polymer matrix and reinforcing fibers embedded therein are known and used as raw materials for making a variety of products. Such reinforced composites are prepared by immersing a fibrous structure such as a two-or three-dimensional grid, a fabric or a non-woven fiber mat into a body of molten polymeric thermoplastic material and inducing the latter to crystallise, by cooling, whereby the plastic material crystallises to form a polymer matrix with a reinforcing fibrous structure embedded therein.

Several modes of polymer crystallisation are known. The most commonly observed mode is the formation of spherulites (1) which are sphere-shaped crystalline structures that grow progressively from random points in the melt until they finally impinge upon each other and fill the entire mass of material. This form of nucleation and growth is occasionally termed as homogeneous and is the one usually observed in the solidification of molten polymer material in bulk.

In the presence of foreign objects such as fibers and under certain conditions, a heterogeneous mode of crystallisation may occur. By this mode the process starts from nucleation sites on the surface of the foreign object, e.g. a fiber where the growth occurs in a direction transversal to the axis of the fiber, resulting in the formation of a laminar layer often referred to as a transcrystalline layer.

In composite materials of the kind in which a fibrous reinforcing structure is embedded in a polymer matrix, such transcrystalline layers function as interfaces between the polymer matrix and the reinforcing fibrous structure. The existence of such transcrystalline interfaces has been observed in composites of a number of polymers such as isotactic polypropylene with E-glass fibers (2); poly(ether ether ketone) (3), the so-called J-polymer (4), polyphenylene sulfide (5), all with carbon fibers, polyethylene with polyethylene fibers (6); and polyethylene with carbon fibers (7). It has also been suggested that the ability of a composite of the kind specified to form trans-crystalline interface layers depends on some surface properties of the reinforcing fibers such as, for example, roughness and the presence of dopant acting as nucleating agents, and examples of polymer composites containing transcrystalline layers induced by nucleating agents are given in Reference (8).

The few available publications dealing with the effect of transcrystalline interface layers on the mechanical properties of the resulting composite material are contradictory and inconclusive. For example, Bessel et al. (9) and Folkes and Wong (10) concluded that the presence of a transcrystalline layer causes reduction in interfacial bond strength while Carvalho and Bretas (7) show that the interfacial strength of carbon fibers in thermoplastic matrices (polyethylene and polypropylene) increases with increased thickness of the transcrystalline layer. It may, nevertheless, be concluded that in composite materials the nature of the interface between the polymer matrix and the surface of the fibers embedded therein is a significant determining factor of the physical properties of the composite.

Polyethylene is a cheap and lightweight polymer which is manufactured and used on a very large scale for a host of different purposes. The mechanical properties of polyethylene are, however, unsatisfactory and it suffers *inter alia* from relatively low impact resistance and poor mechanical strength. In contrast, ultrahigh molecular weight polyethylene has a very high impact resistance and a specific mechanical strength which surpasses even that of Kevlar™, but so far attempts to use ultrahigh molecular weight polyethylene fibers as a reinforcement for making composites failed because of its inability of efficient interface bonding.

It is the object of the present invention to provide new polyethylene composites with ultrahigh molecular weight polyethylene fiber reinforcement and transcrystalline interface bonding between matrix and fibers with improved mechanical properties and high impact resistance.

It is a further object of the present invention to provide a simple and reliable method for the preparation of such composites with no need for nucleating agents.

The present invention is based on the observation that upon a short preliminary treatment with oxygen plasma, ultrahigh molecular weight polyethylene fibers immersed in molten low density polyethylene are capable, upon cooling of the melt, to induce the formation of a transcrystalline layer of polyethylene.

Based on that observation the invention provides a composite comprising a low density polyethylene matrix and a reinforcing structure of ultrahigh molecular weight polyethylene fiber held together by a transcrystalline interface layer between fiber and matrix.

The reinforcing structure of ultrahigh molecular weight polyethylene fibers may be of any suitable shape such as, for example, two-or three-dimensional grids, a fabric, a non-woven fiber mat and the like.

The molecular weight of the ultrahigh molecular weight polyethylene used as reinforcing fibers in accordance with the present invention is above 10⁶.

Examples of ultrahigh molecular weight polyethylene for making reinforcing fibrous structures for the purposes of the present invention are Spectra 1000™, Dyneema™ and Tekmilon™.

As a rule, the thickness of a transcrystalline layer in a composite according to the invention will be within the range of about 1µm to about 40µm.

In accordance with the present invention there is further provided a method for the preparation of a polyethylene composite with a reinforcing structure of ultrahigh molecular weight polyethylene fibers, comprising the steps of:
(i) subjecting a structure of ultrahigh molecular weight polyethylene fibers to treatment with oxygen plasma to produce an activated fiber structure;
(ii) producing a melt of low density polyethylene and maintaining such melt at a temperature above the melting temperature of the low density polyethylene and below the melting temperature of the ultrahigh molecular polyethylene fibers, used in step (i);
(iii) immersing said activated fiber structure in said low density polyethylene melt to form a composite precursor;
(iv) cooling said composite precursor to a transcrystallisation temperature below the melting temperature of the low density polyethylene and maintaining said transcrystallisation temperature until the formation of transcrystalline layers of desired thickness; and
(v) cooling the composite precursor to a lower temperature for full solidification of the matrix.

The temperature at which the matrix is solidified may be room temperature or above.

In the performance of the method according to the invention, the exposure of the reinforcing structure of ultrahigh molecular weight polyethylene fibers to oxygen plasma lasts, as a rule, several minutes only and the duration of such exposure should, in any event, be so limited that the mechanical properties of the ultrahigh molecular weight polyethylene fibers are not adversely affected in any significant way. For example, it has been found that when using oxygen plasma produced with a 60 W radiofrequency generator and delivered at a rate of 10 cc/min., a five minute exposure is sufficient to produce the desired activation.

It has been found that a reinforcing fibrous structure activated in accordance with the teachings of the present invention retains its activity even after storage for weeks or even months.

With a polyethylene that melts at 125°C and an ultrahigh molecular polyethylene fiber that melts at 146.5°C a typical temperature regimen with reference to the above method steps is as follows.

Step (ii) - the melt is maintained at a temperature within the range of 128°C-143°C, e.g. at 135°C.

Step (iv) - the composite precursor is cooled to a transcrystallisation temperature within the range of 109°C to 116°C, e.g. to 115°C and maintained at that temperature until a desired degree of transcrystallinity is obtained;

Step (v) - the composite precursor with trans-crystalline layers on the fibers resulting from step (iv), is cooled down to room temperature and allowed to solidify.

In order to ensure a high degree of homogeneity of the transcrystalline interface layer, cooling down from the first melting temperature of the polyethylene melt to the transcrystallisation temperature at which the transcrystalline layers form, should be rapid, say at the order of 30°C/min.

The duration of step (ii) should be held as short as possible, say several minutes, so as to avoid oxidation of the polyethylene matrix.

Optionally, it is possible in accordance with the invention to reheat the composite obtained after the completion of the above step (v) up to above the transcrystallization temperature, and then to cool the composite rapidly to a temperature below the melting temperature. It has been found that in this way the bonding strength between matrix and fiber is increased.

If desired, this cycle may be repeated several times.

In the following description of the invention reference will be made to the annexed drawings in which:
**Fig. 1** shows three magnified views of a transcrystalline layer of a polyethylene composite according to the invention with a single ultrahigh molecular weight polyethylene reinforcing fiber at three successive stages of production, as observed on a video monitor;
**Fig. 2** is a graphical representation of the growth kinetics of the composite of Fig. 1 at 115°C.

The invention will now be illustrated by the following examples, to which it is not limited.

### EXAMPLE 1: Preparation of a single fiber composite polymer of ultrahigh molecular weight polyethylene and linear low density polyethylene

A bundle of Spectra 1000™ (Allied) ultrahigh molecular weight polyethylene fibers having a diameter of 38 µm was pretreated with oxygen plasma using a glow discharge plasma cleaner (Harrick). To this end, the fiber bundle was first cleaned in acetone and then wound on a glass frame and introduced into the chamber of the plasma cleaner. The chamber was then evacuated to 100 mtorr followed by flashing with oxygen with continuous evacuation until the vacuum was about 40 mtorr. The flow controller was then set to the desired flow rate of 10cc/min. and the 60 W radiofrequency generator turned on. A white glow, typical of oxygen, appeared after 30 sec. and the fibers were exposed for 5 min. more.

The oxygen flow and the plasma generator were switched off and atmospheric pressure was restored within the chamber. The glass frame with the fibers was withdrawn and the fibers were removed from the frame.

Individual activated ultrahigh molecular weight polyethylene fibers so obtained were each introduced into a polyethylene melt inside a Hot Stage Oven (Mettler) which enables to monitor the growth of the transcrystalline layer in real time. The microscopic picture of the growth of the transcrystalline layer in the polyethylene composite precursor was transmitted on-line to a Sony videomonitor. Each polyethylene melt with an activated fiber immersed therein was first maintained for 4-5 min. at a temperature of 135°C then quenchedin 2-3 min. to 115°C. The polyethylene composite precursor was maintained at 115°C for several minutes (typically between 1-3 min.) whereby a transcrystalline layer of desired thickness developed, and was then allowed to cool to room temperature.

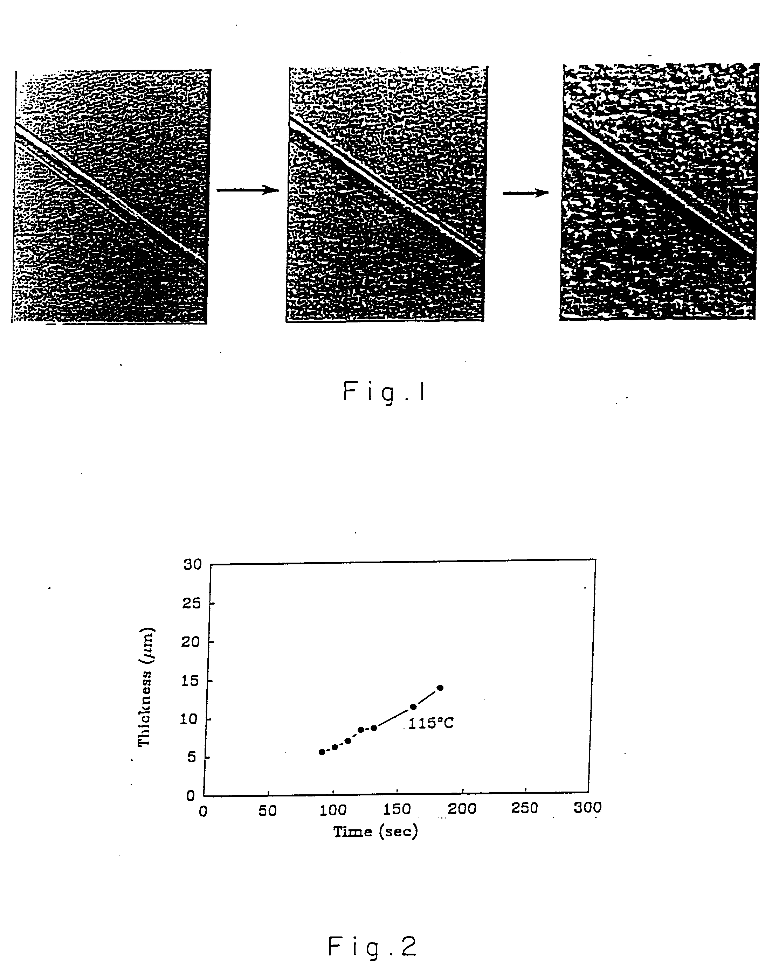

Video pictures of three phases in the growth of the transcrystalline layer in one single fiber composite prepared as above, is shown in Fig. 1.

### EXAMPLE 2: The growth kinetics of the transcrystalline layer in a composite material prepared according to the present invention

Both the temperature and the duration of the isotherm in which the transcrystalline layer is allowed to develop and the thickness of the resulting layer, affect the growth kinetics and finally the mechanical properties of the obtained composite polymer. The growth kinetics of the transcrystalline layer of the material of Example 1 is shown in Fig. 2. Within limits, the longer the composite precursor is maintained at the selected isotherm, the thicker is the transcrystalline layer obtained.

### LIST OF REFERENCES:

1. Sperling, L.H., "Introduction to Physical Polymer Science", Wiely -*Interscience*, New York, 1986
2. Misra, A. et al., *Angew. Makromol. Chem.* **113,** 113 (1983)
3. Lee, Y., Porter, R.S., *Polym. Eng. Sci.* **26,** 633 (1986)
4. Hsiao, B.S., Chen, E.J.H., 33rd *IUPAG International Symposium on Macromolecules*, July 8-13, 1990, Montreal, Canada
5. Boudet, A. et al., Bull. *Soc. Chim. Belg*. **98,** 747 (1989)
6. He, T., Porter, R.S., *J. Appl. Polym. Sci*. **35**, 1945 (1988)
7. Carvalho, W.S., Bretas, R.E.S., *Europ. Polym. J.* **26,** 817 (1990)
8. US 3,812,077
9. Bessel, T. et al., *Farad. Spec. Disc. Chem.* Soc. **2,** 137 (1972)
10. Folkes, M.J., Wong, W.K., *Polymer* **28,** 1309 (1987)

## Claims

1. A composite comprising a low density polyethylene matrix and a reinforcing structure of ultrahigh molecular weight polyethylene fibers held together by a transcrystalline interface layer between fibers and matrix.

2. The composite according to Claim 1, wherein said reinforcing structure of ultrahigh molecular weight polyethylene is in a form
of two-and three-dimensional grids, fabrics or non-woven fiber mats.

3. The composite according to Claim 1 or 2, wherein the thickness of the transcrystalline layer is within the range of from about 1 to about 40µm.

4. The composite according to any one of Claims 1 to 3, wherein the molecular weight of the ultrahigh molecular weight polyethylene is above 10⁶.

5. A method for the preparation of a polyethylene composite with a reinforcing structure of ultrahigh molecular weight polyethylene fibers, comprising the steps of:
(i) subjecting a structure of ultrahigh molecular weight polyethylene fibers to treatment with oxygen plasma to produce an activated fiber structure;
(ii) producing a melt of low density polyethylene and maintaining such melt at a temperature above the melting temperature of low density polyethylene and below the melting temperature of the ultrahigh molecular polyethylene fibers, used in step (i);
(iii) immersing said activated fiber structure in said low density polyethylene melt to form a composite precursor;
(iv) cooling said composite precursor to a transcrystallisation temperature below the melting temperature of the low density polyethylene and maintaining said transcrystallisation temperature until the formation of transcrystalline layers of desired thickness; and
(v) cooling the composite precursor to a lower temperature for full solidification and curing of the matrix.

6. The method according to Claim 5, wherein full solidification and curing occurs at room temperature.

7. The method according to Claim 5 or 6, wherein the product of step (v) in Claim 5 is subjected to a further formative cycle comprising heating said product to above said transcrystallisation temperature and then cooling it rapidly to a temperature below the melting temperature.

8. The method according to Claim 7, wherein said formative cycle is repeated several times.
